## Europäisches Patentamt

## European Patent Office

## Office européen des brevets

(19)

(11) Veröffentlichungsnummer: **0 235 081**
**A1**

(12) # EUROPÄISCHE PATENTANMELDUNG

(21) Anmeldenummer: **87810066.8**

(22) Anmeldetag: **02.02.87**

(51) Int. Cl.³: **B 01 D 13/00**
**C 02 F 9/00**

(30) Priorität: **07.02.86 CH 483/86**

(43) Veröffentlichungstag der Anmeldung:
**02.09.87 Patentblatt 87/36**

(84) Benannte Vertragsstaaten:
**CH DE ES FR GB IT LI**

(71) Anmelder: **CIBA-GEIGY AG**
**Klybeckstrasse 141**
**CH-4002 Basel(CH)**

(72) Erfinder: **Henz, Alfred**
**Baslerstrasse 104**
**CH-4153 Reinach(CH)**

(72) Erfinder: **Pfenninger, Heinz, Dr.**
**Rebackerweg 30**
**CH-4419 Lupsingen(CH)**

(54) **Verfahren zur Reinigung von farbstoffhaltigen Abwässern.**

(57) Verfahren zur Reinigung/Entfärbung von farbstoffhaltigen Abwässern, die in einer Vorbehandlungsstufe durch Zugabe von Säure oder Alkali auf einen pH-Wert im Bereich von 4 bis 9 eingestellt sind, mit Hilfe eines zweistufigen Membrantrennverfahrens. Das Abwasserkonzentrat, das nach der ersten Stufe erhalten wird, wird in der zweiten Stufe weiter entfärbt und entsalzt. Das Permeat der zweiten Stufe wird in die Vorbehandlungsstufe zurückgeführt, während das Permeat der ersten Stufe und das Abwasserkonzentrat, das nach der zweiten Stufe erhalten wird, in üblicher Weise entsorgt werden.

EP 0 235 081 A1

Croydon Printing Company Ltd.

CIBA-GEIGY AG
Basel (Schweiz)

1-15745/+/CIT

Verfahren zur Reinigung von farbstoffhaltigen Abwässern
―――――――――――――――――――――――――――――――――――――――――――――――

Die vorliegende Erfindung betrifft ein Verfahren zur Reinigung und Aufbereitung von farbstoffhaltigen Abwässern, wie sie bei der Farbstoffherstellung oder bei der Verwendung von Farbstoffen in Färbereien und Druckereien anfallen.

Aus der US-A-4,200,526 ist es bereits bekannt, farbstoffhaltige Abwässer mit Flockungsmitteln zu behandeln, um die Farbstoffe auszufällen, wobei nach dem Abfiltrieren des Flockulats das verbleibende Filtrat durch Umkehrosmose weiter gereinigt wird.

Es wurde nun ein kontinuierlich arbeitendes Verfahren für die Reinigung/ Entfärbung von Farbabwässern gefunden, das in zwei Stufen jeweils mit Hilfe von Membranen arbeitet und mit dem eine gute Abtrennung der Farbstoffe und gegebenenfalls weiterer in den Abwässern vorhandener Komponenten und damit insbesondere eine Entfärbung der Abwässer erreicht werden kann.

Gegenstand der vorliegenden Erfindung ist daher ein kontinuierlich arbeitendes Verfahren zur Reinigung/Entfärbung von farbstoffhaltigen Abwässern, die in einer Vorbehandlungsstufe standardisiert worden sind, welches dadurch gekennzeichnet ist, dass man
(a) die Abwässer einem ersten Membrantrennverfahren unterwirft, wobei ein Permeat (1) und ein Konzentrat (1) erhalten werden,
(b) das Konzentrat (1) einem zweiten Membrantrennverfahren unterwirft, wobei ein Permeat (2) und ein Konzentrat (2) erhalten werden,

(c) das Permeat (2) in die Vorbehandlungsstufe zurückführt und

(d) das Permeat (1) und das Konzentrat (2) entsorgt.

Für die erfindungsgemässe kontinuierlich durchgeführte Reinigung/Konzentrierung von farbstoffhaltigen Abwässern, z.B. solcher aus der Farbstoffproduktion, kann man die genannten Verfahrensstufen wie folgt näher erläutern:

Standardisierung: Die Farbabwässer, in der Regel aus den Pressfiltern der Farbstoffproduktion oder aus z.B. Textilfärbereien, werden in einem Tank gesammelt, mit wässriger Alkalimetallhydroxidlösung (z.B. Natriumhydroxid) oder mit einer Mineralsäure (z.B. Salzsäure) auf den gewünschten pH-Wert eingestellt, durch ein Grobfilter filtriert und auf die gewünschte Temperatur erwärmt, bevor die Einspeisung in die Membrantrennanlage erfolgt.

Im Verfahrensschritt (a) erfolgt dann kontinuierlich mittels einer ersten Membrantrennanlage die Entfernung insbesondere der organischen Anteile aus dem so vorbehandelten Abwasser, wodurch im wesentlichen dessen Entfärbung, verbunden mit einer Konzentration, d.h. eine Reduktion des Volumens, erreicht wird. In dem sich anschliessenden kontinuierlich durchgeführten Verfahrensschritt (b) erfolgt die Endkonzentrierung und zusätzliche Entsalzung des Konzentrats aus Stufe (a), während das Permeat aus (b) in die Vorbehandlungsstufe zurückgeführt wird (Stufe (c)). In Stufe (d) wird schliesslich das weitgehend entfärbte Permeat aus Stufe (a) entsorgt, d.h. in der Regel einer Abwasserreinigungsanlage zugeführt, während das Konzentrat aus Stufe (b) z.B. einer Nassoxidation unterworfen wird.

In den genannten Abwässern können die verschiedensten Farbstoffe bezüglich der Farbnuance und der chemischen Zusammensetzung vorhanden sein.

Die Farbstoffe können gelöst in den Abwässern vorliegen, sie können aber auch als wässrige Dispersionen oder Suspensionen vorliegen.

Die Farbstoffe können also in Wasser schwer- bis unlöslich (Dispersionsfarbstoffe) oder vorzugsweise wasserlöslich (saure und basische Farbstoffe) sein. Es handelt sich dabei beispielsweise um metallfreie oder metallhaltige und metallisierbare Mono-, Dis- und Polyazofarbstoffe, Pyrazolon-, Thioxanthon-, Oxazin-, Stilben-, Formazanfarbstoffe, Anthrachinon-, Nitro-, Methin-, Triphenylmethan-, Xanthon-, Naphthazarin-, Styryl-, Azastyryl-, Naphthoperinon-, Chinophthalon- und Phthalocyaninfarbstoffe, die gegebenenfalls auch mindestens einen faserreaktiven Rest im Farbstoffmolekül aufweisen können.

Die wasserlöslichen Farbstoffe, zu denen z.B. Metallkomplex-, Chromierungs-, Entwicklungs-, Beizen- und Reaktivfarbstoffe gehören, enthalten in der Regel Sulfonsäure- und/oder Carbonsäuregruppen, die als freie Säuren oder in Salzform vorliegen können.

Bei diesen wasserlöslichen anionischen Farbstoffen handelt es sich insbesondere um die Alkalimetallsalze oder Ammoniumsalze der sogenannten sauren Wollfarbstoffe, der Reaktivfarbstoffe oder der substantiven Baumwollfarbstoffe der Azo-, Anthrachinon- und Phthalocyaninreihe. Als Azofarbstoffe kommen z.B. metallhaltige oder metallfreie Mono- und Disazofarbstoffe sowie Formazanfarbstoffe, die eine oder mehrere Sulfonsäuregruppen enthalten, in Betracht. Als Anthrachinonfarbstoffe sind insbesondere 1-Amino-4-arylamino-anthrachinon-2-sulfonsäuren und als Phthalocyaninfarbstoffe besonders sulfonierte Kupferphthalocyanine oder Phthalocyaninarylamide zu erwähnen.

Als wasserlösliche Metallkomplexfarbstoffe kommen sulfonsäure- bzw. carbonsäuregruppenhaltige Metallkomplexfarbstoffe, beispielsweise 1:1- oder 1:2-Metallkomplexe von Azo- oder Azomethinfarbstoffen oder metallisierte Phthalocyanine, insbesondere Kupfer- und Nickelphthalocyanine, in Betracht. Bei den 1:1- oder 1:2-Metallkomplexen handelt es sich vorzugsweise um 1:1-Nickelkomplexe, 1:1-Kobaltkomplexe, 1:1-Kupferkomplexe, 1:1-Chromkomplexe, 1:1-Eisenkomplexe oder um symmetrische oder asymmetrische 1:2-Kobaltkomplexe, 1:2-Eisenkomplexe oder 1:2-Chromkomplexe von insbesonder o-Carboxy-o'-hydroxy-, o-Hydroxy-

- 4 -

o'-amino- oder o,o'-Dihydroxyazofarbstoffen des Benzol-azo-benzol-,
Naphthalin-azo-naphthalin-, Benzol-azo-naphthalin-, Benzol-azo-
pyrazolon-, Benzol-azo-pyridon- oder Benzol-azo-acetessigsäureamid-
Typs, wobei diese Gruppierungen unsubstituiert oder auch substituiert
sein können. Als Substituenten kommen z.B. in Betracht: gegebenenfalls substituierte Sulfonsäureamide oder Sulfone, Halogen oder Nitro.

Die Kupfer- und Nickelphthalocyanine sind die üblichen Gemische aus
den verschieden sulfonierten Komponenten.

Die Reaktivfarbstoffe enthalten z.B. heterocyclische Gruppen oder
Acylgruppen von Carbonsäuren, wobei diese Gruppen reaktive (abspaltbare) Halogenatome aufweisen. Bei den in den Abwässern vorliegenden
Reaktivfarbstoffen handelt es sich natürlich auch um solche, deren
Reaktivgruppe bereits abgespalten (abhydrolisiert) ist.

Bei den wasserlöslichen basischen Farbstoffen handelt es sich um die
gebräuchlichen Salze und Metallhalogenid-, beispielsweise Zinkchlorid-,
Doppelsalze der bekannten kationischen Farbstoffe, insbesondere der
Methin- bzw. Azamethinfarbstoffe, die z.B. einen Indolinium-,
Pyrazolium-, Imidazolium-, Triazolium-, Tetrazolium-, Oxadiazolium-,
Thiodiazolium-, Oxazolium-, Thiazolium-, Pyridinium-, Pyrimidinium-,
Pyrazinium-Ring enthalten.

Die genannten Heterocyclen können gegebenenfalls substituiert und/oder
mit aromatischen Ringen kondensiert sein. Ferner kommen auch kationische
Farbstoffe der Diphenylmethan-, Triphenylmethan-, Oxazin-, Thiazin-
und 1,2-Pyran-Reihe in Frage, sowie schliesslich auch Farbsalze der
Arylazo- und Anthrachinonreihe.

Bezüglich weiterer Einzelheiten zu den vorgenannten Farbstoffen und
Farbstoffklassen wird auf Colour Index, 3. Auflage, publiziert von
der Society of Dyers and Colorists verwiesen.

Neben den Farbstoffen enthalten die Abwässer, deren pH-Wert sowohl im sauren als auch im alkalischen Bereich liegen kann, praktisch immer noch Säuren, wie z.B. Salz- oder Schwefelsäure, oder alkalische Verbindungen, wie z.B. Alkalimetallhydroxide (NaOH, KOH), Ammoniak (als Ammoniumhydroxid) oder Amine (Alkyl-, Alkanolamine), ferner Salze, wie insbesondere Halogenide (Chloride) und Sulfate, wobei Natriumchlorid und Natriumsulfat bzw. Ammoniumchlorid und Ammoniumsulfat als Hauptvertreter genannt werden können; und Metallionen von anderen als den genannten Alkalimetallen, z.B. mehrwertige Magnesium-, Kupfer-, Zink-, Chrom-, Eisen-, Kobalt- und Nickelionen.

Ferner können auch Farbstoffzwischenprodukte und andere übliche Komponenten, wie z.B. Tenside, Lösungsmittel, hydrotrope Mittel (Harnstoff) usw. vorhanden sein.

Die bei der Farbstoffproduktion anfallenden farbstoffhaltigen Abwässer weisen meistens einen pH-Wert von 0,5 bis 10 auf. Sie werden in einem Sammeltank mit wässrigen Alkalimetallhydroxidlösungen oder Mineralsäuren versetzt und auf einen pH-Wert im Bereich von 4 bis 9, vorzugsweise 5 bis 7, eingestellt. Anschliessend werden die Abwässer durch ein grobes Filter filtriert.

Die Temperatur der Abwässer, die für die Durchführung des Membrantrennverfahrens mindestens Raumtemperatur (15 bis 20°C) bis etwa 80°C, vorzugsweise 40 bis 80°C und insbesondere 40 bis 60°C betragen soll, wird in der Regel stufenweise, z.B. durch Wärmeaustauscher und Aufheizung mit Direktdampf erreicht.

Die so behandelten (standardisierten) Farbabwässer werden dann kontinuierlich durch Membrantrennverfahren gereinigt und konzentriert. Als Membrantrennverfahren kommen erfindungsgemäss solche membrangebundenen Trennverfahren in Betracht, die als Hyperfiltration bezeichnet werden.

Bei diesem Trennverfahren handelt es sich im Gegensatz zur üblichen Filtration, wobei Feststoffteilchen von einer Flüssigkeit abgetrennt werden, um eine selektive Molekulartrennmethode. Die Membran wirkt als
Molekularsieb, und vermag aufgelöste Stoffe, bei ausreichender Molekülgrösse an der Membrangrenzfläche zurückzuhalten. Zweckmässig verwendet
man Membranen mit einem "cut-off level" (Ausschlussgrenze), der eine
mindestens 80%ige, vorzugsweise 90%ige Retention für die im Abwasser
vorhandenen gelösten organischen Bestandteile aufweist. Hierbei
handelt es sich um solche Membranen, deren Trenngrenze im Molekulargewichtsbereich von 200 bis 800, vorzugsweise 200 bis 500 liegt, und
die symmetrisch oder insbesondere asymmetrisch sind.

Geeignet sind feinporige Ionenaustauscher- oder Lösungs-Diffusionsmembranen mit Porengrössen von etwa 0,1 bis 50, insbesondere 0,1 bis
10 nm.

Sie lassen Wasser und gelöste Komponenten (Salze), die auf Grund
ihres Molekulargewichts unterhalb der Trenngrenze liegen, bei geringem
bis mittlerem Druck durchtreten. Farbstoffe und andere organische
Verbindungen sollen jedoch zurückgehalten werden.

Da die erfindungsgemäss verwendeten Membranen vorzugsweise ionische
Gruppen enthalten und damit anionische und/oder kationische Ladungen
tragen, ist allerdings für den Trenneffekt neben dem Molekulargewicht
des abzutrennenden (gelösten) Stoffes auch noch dessen Ladung massgebend. So ist es z.B. möglich eine gute Abtrennung von mehrwertigen
Kationen (Cu$^{2+}$, Co$^{2+}$, Cr$^{3+}$), die in komplexierter Form vorliegen
können, von einwertigen Kationen (Na$^{+}$, K$^{+}$) zu erreichen.

Zur Theorie und Anwendung von Membrantrennprozessen siehe z.B.
H. Strathmann, H. Chmiel, Chem. Ing. Tech. 57, 581 (1985) oder
W. Pusch, A. Welch, Angew. Chem. 94, 670 (1982).

Die für das erfindungsgemässe Verfahren besonders geeigneten Membranen
sind Polymermembranen aus organischen Polymeren, die durch ionische
Gruppen enthaltende Reste chemisch modifiziert sind. Als Polymere zur Herstellung der Membranen geeignet sind natürliche, halbsynthetische oder synthetische Materialien, wie z.B. Celluloseacetate, Polyvinylalkohole, Polyacrylnitrile, Polyamide, Polysulfone, Polystyrole, Polyvinylfluoride, Polytetrafluoräthylene oder hydrophilierte Polyolefine.

Diese Basispolymeren sollten reaktionsfähige Gruppen enthalten, beispielsweise Hydroxyl-, Amino-, Amidoxim- und/oder Halogenalkyl-(Chormethyl)-gruppen, die mit geeigneten, ionische Gruppen enthaltenden Verbindungen unter Ausbildung kovalenter chemische Bindungen reagieren können, um so die chemisch modifizierten Membranen zu erhalten.

Bevorzugt zum Einsatz im erfindungsgemässen Verfahren kommen Membranen aus den folgenden Polymeren, die wie angegeben chemisch modifiziert sind:
- Celluloseacetate, z.B. solche mit niedrigem Acetylgruppengehalt, aber auch höher acylierte Cellulose, z.B. sog. Zweieinhalbacetat,
- Polyvinylalkohole,
- Polystyrole,
und vorzugsweise
- Polyacrylnitrile und Copolymere aus Acrylnitril und anderen äthylenisch ungesättigten Monomeren, und
- Polysulfone.

Geeignete ionische Gruppen in den membranbildenden Polymeren bzw. den Membranen sind als nionische Gruppen z.B. Sulfato-, Carbonsäure- und insbesondere Sulfonsäuregruppen, und als kationische Gruppen z.B. Phosphonium-, Sulfonium- und insbesondere Ammoniumgruppen ($-NH_4^{\oplus}$, $-NR_4^{\oplus}$ R = z.B. Niederalkyl). Es können auch anionische und kationische Gruppen gemeinsam in einer Membran vorhanden sein.

Die chemische Modifikation kann einstufig oder mehrstufig erfolgen. Einstufig kann die Modifikation z.B. bei Celluloseacetaten oder Polyvinylalkoholen erfolgen, die mit reaktiven, ionischen Verbindungen, die farblos oder farbig sein können, umgesetzt werden. Geeignet
sind dazu Reaktivfarbstoffe, z.B. aus der Klasse der Azo-, Anthrachinon- oder Formazanfarbstoffe, wobei diese gegebenenfalls auch als
Metallkomplexe vorliegen können.

Mehrstufige chemische Modifikationen zur Herstellung der erfindungsgemässen Membranen werden z.B. bei solchen auf Polyacrylnitrilbasis
durch Umsetzung mit Hydroxylamin, einer polyfunktionellen Verbindung,
einem Polymer und einer ionischen Verbindung oder bei solchen auf
Polysulfonbasis durch Einführung einer Halogenalkylgruppe in das Basispolymer, gefolgt von der Umsetzung mit einem Polymer und einer ionischen
Verbindung angewandt.

Eine mehrstufige Modifikation von Celluloseacetaten zur Herstellung
von erfindungsgemäss geeigneten Membranen kann wie folgt durchgeführt werden:
Umsetzung mit einer polyfunktionellen Verbindung, einem Polymer
und einer ionischen Verbindung.

Gegebenenfalls ist es auch möglich, Membranen einzusetzen, die aus
dem Basispolymer, das mit einer vernetzten Polymerschicht beschichtet
ist, bestehen. Als Vernetzungsmittel dienen ionische mindestens
difunktionelle Verbindungen.

Weitere Einzelheiten über die erfindungsgemäss verwendeten Membranen
können den nachfolgenden Patentpublikationen entnommen werden:
US-A-4 247 401, US-A-4 477 634, US-A-4 604 204, US-A-4 584 103,
EP-A-47 953, EP-A-61 424, EP-A-82 355 und EP-A-114 286.

Die Membranen werden zweckmässiger Weise in Röhrchenform verwendet,
wobei mehrere Rörchen in einem Membranmodul zusammengefasst werden.

Im Einzelnen wird das erfindungsgemässe Verfahren wie folgt durchgeführt:

Farbabwässer (Filtrate) der Farbstoffproduktion z.B. aus Pressfiltern,
in denen verschiedene Farbstoffe filtriert wurden, werden in einem Tank
gesammelt. Diese gemischten Farbabwässer werden mit wässrigen Alkalimetallhydroxidlösungen oder Mineralsäure auf einen pH-Wert im Bereich
von 5 bis 7 gestellt, durch ein Grobfilter filtriert und mit einer
Förderpumpe über einen Wärmeaustauscher, der im Gegenstrom zu warmem
Permeat betrieben wird, in eine Pumpvorlage gepumpt und mit Direktdampf auf eine Temperatur von 40 bis 50°C, insbesondere von 45 bis 50°C
aufgeheizt. Mittels einer Hochdruckpumpe wird das Farbabwasser, das einen
Gehalt an organischen Verbindungen von etwa 10 bis 30 g/l und von
Salzen (z.B. NaCl, $NH_4Cl$ etc.) von 10 bis 220 g/l (insgesamt bis zu
etwa 250 g/l an gelösten Stoffen) enthalten sollte, in eine mehrstufige Hyperfiltrationsanlage (Umkehrosmose-Anlage) (1) gepumpt. In
jeder Stufe sind die Module parallel geschaltet, die Membranröhrchen
in jedem Modul sind in Reihe (hintereinander) geschaltet. Es wird bei
einem Druck von etwa 30 bis 45 bar gearbeitet.

Der Permeatdurchfluss durch die Membran beträgt etwa 400 bis 1000,
beispielsweise 500 $l/m^2d$. Er nimmt mit zunehmender Farbstoffkonzentration ab, da die Viskosität des zu reinigenden Abwassers zunimmt.
Das Trennverfahren der 1. Stufe wird beendet, wenn eine 7- bis 15-fache
Volumenkonzentration, z.B. eine 10-fache Volumenkonzentration, des zu
reinigenden Abwassers erreicht ist.

Die Werte für den Farbrückhalt sind weitgehend unabhängig von der
Konzentration des Farbabwassers, dies gilt hingegen nicht für den Salzrückhalt (Donnan-Effekt).

Der Entfärbungseffekt wird durch Messen der Extinktion des Permeats
überwacht. Der Farbstoffrückhalt ist in der Regel grösser als 99%.
Für $Cu^{2+}$ wurden 75 bis 99% und für $Cr^{3+}$ 85 bis 99% Rückhalt gemessen.

0235081

Das praktisch farblose Permeat aller Stufen aus der Hyperfiltrations-Anlage (1) wird gesammelt und mit einer Förderpumpe über den erwähnten Wärmeaustauscher einer Abwasserreinigungsanlage zugeführt.

Das Konzentrat aus (1) wird zur Endkonzentrierung und weiteren Entsalzung kontinuierlich mittels einer Hochdruckpumpe in eine mehrstufige Hyperfiltrationsanlage (2) gepumpt. Es wird in etwas geringerem Druck (z.B. 25 bis 35 bar) und etwas höherem Temperaturbereich (z.B. 55 bis 80°C) wie in Anlage (1) gearbeitet. Diese Anlage ist insgesamt kleiner als die Anlage (1), da ein kleineres Flüssigkeitsvolumen zu verarbeiten ist. Sie ist mit Membranen bestückt, wie sie auch in Anlage (1) verwendet werden, gegebenenfalls können hier Membranen mit etwas grösseren Poren und grösserer Temperaturbeständigkeit verwendet werden. Die Module sind parallel, die Membranröhrchen hintereinander geschaltet und jeder Einzelstufe ist eine Zirkulationspumpe und ein Wärmeaustauscher zugeordnet. Das sog. Konzentrat (1) wird mit einem Gehalt an organischen Verbindungen von 5 bis 20 Gew.% in die zweite Membrantrennstufe eingespeist. Man erhält ein relativ farbiges Permeat (2), das in die Vorbehandlungsstufe zurückgepumpt wird, während das Konzentrat (2) nach Durchlaufen der zweiten Hyperfiltrationsanlage, wodurch eine 20- bis 30-fache Volumenkonzentration, bezogen auf das Volumen des Ausgangsabwassers, erreicht wird, zur weiteren Entsorgung (Vernichtung) in der Regel einer Nassoxidation oder Verbrennung unterworfen wird.

Das Konzentrat (2) weist ungefähr die folgende Zusammensetzung auf: 20 bis 45 Gew.% organische Verbindungen, 5 bis 15 Gew.% TOC (organischer Kohlenstoff), 1 bis 10 Gew.% (anorganische) Salze.

Wird eine weitergehende Entsalzung des Konzentrats (2) angestrebt, so kann man dies durch Diafiltration mittels Verdünnen mit Wasser in der 2. Membrantrennstufe erreichen.

Im nachfolgenden Beispiel wird das erfindungsgemässe Verfahren weiter erläutert, ohne es jedoch auf das Beispiel zu beschränken. Teile und Prozente - sofern nicht anders angegeben - beziehen sich auf das Gewicht. Die Temperatur ist in Grad Celsius angegeben.

Mit dem erfindungsgemässen Verfahren erreicht man bei kontinuierlicher Verfahrensführung eine gute Trennleistung (Abtrennung der Farbstoffe, Entfärbung der Abwässer). Durch die Zweistufigkeit des Verfahrens wird eine Erhöhung des osmotischen Drucks in Grenzen gehalten und damit bleibt der Energieaufwand zur Durchführung des erfindungsgemässen Verfahrens im wirtschaftlichen Rahmen. Auch der Fluxabfall, der z.B. durch eine Verstopfung der Membran verursacht werden kann und bei einer einstufigen Behandlung der Abwasser zu sehr langen Behandlungszeiten in der Membrantrennanlage führen würde, spielt bei der zweistufigen Verfahrensführung praktisch keine Rolle.

Beispiel

Saure Farbabwässer von Pressfiltern aus der Produktion von Reaktiv-, Säure- und Metallkomplexfarbstoffen werden in einem Tank gesammelt und mit 30%iger wässriger Natriumhydroxidlösung auf einen pH-Wert von 4 - 5 eingestellt. Danach wird das vorbehandelte Farbabwasser grob filtriert und mit einer Förderpumpe über einen Plattenwärmeaustauscher, der im Gegenstrom mit warmem Permeat betrieben wird, in eine Pumpvorlage gepumpt und mit Direktdampf auf eine Temperatur von 45°C weiter aufgewärmt. Das Farbabwasser, das einen Gehalt an organischem Kohlenstoff (TOC) von maximal 10 g/l und von Salz (NaCl) von maximal 160 g/l aufweist, wird vom Vorlagebehälter über eine Hochdruckpumpe kontinuierlich in die siebenstufige Hyperfiltrationsanlage (1) gepumpt, wobei diese Stufen mit jeweils 46 Einzelmodulen mit 120 m$^2$ Membranfläche (chemisch modifizierte Polyacrylnitrilmembranen, hergestellt gemäss Beispiel 1 der US-A-4 584 103) ausgestattet sind. Innerhalb der Stufen sind die Module parallel geschaltet, alle 18 Rohre in einem Modul sind in Reihe und jeder Einzelstufe ist eine Zirkulationspumpe zugeordnet. Die Zirkulationspumpe erzeugt die für die Module notwendige Anströmleistung, während die Hochdruckpumpe die Druckerhöhung von 40 bar besorgt und soviel Lösung in das System einspeist, wie Konzentrat und Permeat abfliessen. Die Zirkulationspumpen müssen nur den Druckverlust von 4 bis 8 bar der Einzelmodule überwinden.

Mit einem Bypassregelventil nach der Hochdruckpumpe wird der Betriebsdruck der Gesamt-Anlage eingestellt. Der Abfluss des Konzentrats wird durch eine Verhältnisregelung (Zufluss:Abfluss) mit einer unteren Sollwertbegrenzung des Abflussreglers kontrolliert, so dass immer eine gewisse Menge Konzentrat abfliesst. Durch diese Massnahme wird das Risiko einer Ueberkonzentrierung des Konzentrats stark vermindert.

Der Durchfluss durch die Membran beträgt etwa 500 l/m$^2$d. Er nimmt mit zunehmender Farbstoffkonzentration stark ab. Das Trennverfahren der 1. Stufe wird bei einer etwa 10-fachen Volumenkonzentration des zu
reinigenden Abwassers abgebrochen. Die Werte für den Farbrückhalt sind
weitgehend unabhängig von der Konzentration des Farbabwassers, dies
gilt hingegen nicht für den Salzrückhalt (Donnan-Effekt).

Der Entfärbungseffekt wird durch Messen der Extinktion des Permeats
überwacht. Der Farbstoffrückhalt ist in der Regel grösser als 99%.
Für $Cu^{2+}$ wurden 75 bis 99% und für $Cr^{3+}$ 85 bis 99% Rückhalt gemessen.

Das praktisch farblose Permeat aller Stufen aus der Hyperfiltrations-
Anlage (1) wird gesammelt und mit einer Förderpumpe über einen Wärmeaustauscher einer Abwasserreinigungsanlage zugeführt.

Das Konzentrat fliesst in einen Entkoppelungstank und wird dann zur
Entkonzentrierung und weiteren Entfernung organischer Verbindungen sowie
weiteren Entsalzung mittels einer Hochdruckpumpe in eine vierstufige
Hyperfiltrations-Anlage (2) gepumpt. Jede Stufe hat 45 $m^2$ Membranfläche
(Membran wie beschrieben) und ist mit jeweils 18 Einzelmodulen ausgestattet. Innerhalb der Stufe sind die Module parallel geschaltet und
jeder Einzelstufe sind eine Zirkulationspumpe und ein Wärmeaustauscher
zugeordnet. Die Regelung ist analog zu derjenigen von Anlage (1). Hier
wird jedoch das relativ farbige Permeat in den Vorbehandlungstank
zurückgeführt und das Konzentrat (Zusammensetzung wie oben angegeben)
wird in einem Tank zwischengelagert vor seinem weiteren Transport
z.B. zu einer Nassoxidationsanlage. In beiden Anlagen sind die Stufen
an einer Verteilerleitung angeschlossen, wobei die Konzentration über
die Leitungslänge von Stufe zu Stufe zunimmt. Durch Blendeneinbauten in
diese Leitungen wird die Rückvermischung des Konzentratstromes stark
reduziert.

Jede Stufe kann, ohne Unterbrechung des kontinuierlichen Betriebes,
durch ein Reinigungssystem mit Permeat vorgespült, dann mit warmem
demineralisiertem Wasser gespült oder, wenn notwendig einer chemischen
Reinigung unterzogen werden.

Patentansprüche

1. Verfahren zur Reinigung von farbstoffhaltigen Abwässern, die in
einer Vorbehandlungsstufe standardisiert worden sind, dadurch gekennzeichnet, dass man

(a) die Abwässer einem ersten Membrantrennverfahren unterwirft, wobei
    ein Permeat (1) und ein Konzentrat (1) erhalten werden,

(b) das Konzentrat (1) einem zweiten Membrantrennverfahren unterwirft, wobei ein Permeat (2) und ein Konzentrat (2) erhalten
    werden,

(c) das Permeat (2) in die Vorbehandlungsstufe zurückführt und

(d) das Permeat (1) und das Konzentrat (2) entsorgt.


2. Verfahren nach Anspruch 1, dadurch gekennzeichnet, dass man die
Abwässer in der Vorbehandlungsstufe auf einen pH-Wert im Bereich von
4 bis 9 einstellt und die Temperatur der Abwässer zwischen Raumtemperatur und etwa 80°C, vorzugsweise zwischen 40 bis 80°C und insbesondere zwischen 40 bis 60°C, liegt.


3. Verfahren nach den Ansprüchen 1 und 2, dadurch gekennzeichnet,
dass die Membrantrennverfahren Hyperfiltrationen sind.


4. Verfahren nach den Ansprüchen 1 bis 3, dadurch gekennzeichnet, dass
man die Membrantrennverfahren mit gegebenenfalls chemisch modifizierten
Polymermembranen durchführt.


5. Verfahren nach Anspruch 4, dadurch gekennzeichnet, dass die Polymermembranen chemisch modifizierte Celluloseacetat-, Polyvinylalkohol-
oder Polystyrolmembranen, vorzugsweise chemisch modifizierte Polyacrylnitril- oder Polysulfonmembranen sind und die chemische Modifikation
in der Einführung anionischer und/oder kationischer Gruppen in die
Membranen besteht.


6. Verfahren nach einem der Ansprüche 1 bis 5, dadurch gekennzeichnet,
dass die beiden Membrantrennverfahren bei Drücken von 10 bis 80, vorzugsweise 20 bis 50 bar durchgeführt werden.

7. Verfahren nach Anspruch 6, dadurch gekennzeichnet, dass im ersten Membrantrennverfahren bei Drücken von 30 bis 45 bar und im zweiten Membrantrennverfahren bei Drücken von 25 bis 30 bar gearbeitet wird.

8. Verfahren nach Anspruch 1, dadurch gekennzeichnet, dass das Permeat (1) durch Einleiten in eine Abwasserreinigungsanlage und das Konzentrat (2) durch Nassoxidation oder Verbrennung entsorgt wird.

9. Verfahren nach Anspruch 1, dadurch gekennzeichnet, dass nach dem ersten Membrantrennverfahren eine 7- bis 15-fache und nach beiden Membrantrennverfahren eine 20- bis 30-fache Volumenkonzentration, bezogen auf das standardisierte farbstoffhaltige Abwasser, mit dem das Gesamtverfahren begonnen wird, erreicht wird.

10. Anwendung des Verfahrens nach Anspruch 1 zur Reinigung von farbstoffhaltigen Abwässern aus der Farbstoffproduktion oder aus Färbereien oder Druckereien, insbesondere aus Textilfärbereien und -druckereien.

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 116 942 (J. VAN OPBERGEN GmbH) <br> * Zusammenfassung; Ansprüche 1-3; Seite 4, Zeile 1 - Seite 7, Zeile 2; Seite 8, Zeile 24 - Seite 9, Zeile 30; Figur * <br><br> --- | 1,3-5, 10 | B 01 D 13/00 <br> C 02 F 9/00 |
| Y | US-D- 524 806 (K.K. LADHA et al.) <br> * Zusammenfassung; Figur 1; Spalte 4, Zeile 8 - Spalte 5, Zeile 42 * <br><br> --- | 1-3,6, 10 | |
| Y | DE-A-2 347 329 (HAGER & ELSÄSSER) <br> * Seite 1, Zeilen 1-4; Seite 5, Zeile 8 - Seite 8, Zeile 8; Figur 2 * <br><br> --- | 1,10 | RECHERCHIERTE SACHGEBIETE (Int. Cl.4) |
| Y | US-A-3 758 405 (H.A. FREMONT) <br> * Zusammenfassung; Figur 1; Spalte 2, Zeile 42 - Spalte 3, Zeile 69; Spalte 5, Zeilen 8-33 * | 2 | B 01 D <br> C 02 F |
| A | | 8 | |
| Y | GB-A-2 000 695 (RIEGEL TEXTILE) <br> * Zusammenfassung; Figur 1; Seite 2, Zeile 14 - Seite 3, Zeile 6; Seite 4, Zeile 15 - Seite 5, Zeile 27 * <br><br> ---      -/- | 3,6 | |

Der vorliegende Recherchenbericht wurde für alle Patentansprüche erstellt.

| Recherchenort <br> DEN HAAG | Abschlußdatum der Recherche <br> 17-06-1987 | Prüfer <br> VAN IDDEKINGE R.E. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches
Patentamt

**EUROPÄISCHER RECHERCHENBERICHT**

Nummer der Anmeldung
0235081

EP 87 81 0066

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | JOURNAL OF THE WATER POLLUTION CONTROL FEDERATION, Band 44, Nr. 8, August 1972, Seiten 1545-1551, Washington, D.C., US; C. AURICH et al.: "Treatment of textile dyeing wastes by dynamically formed membranes" * Seite 1545, Spalte 1 - Spalte 2, Zeile 28; Seite 1548, Spalte 2, Zeile 21 - Seite 1549, Spalte 1, Zeile 43 * | 1-3,10 | |
| | --- | | |
| A | DE-A-2 711 072 (CHAMPION INTERNATIONAL) * Ansprüche 1-3,7,9; Seite 3, Zeile 9 - Seite 5, Zeile 5; Seite 6, Zeilen 6-15 * | 6 | |
| | --- | | RECHERCHIERTE SACHGEBIETE (Int. Cl.4) |
| A | DE-A-2 046 055 (HYDRONAUTICS-ISRAEL) * Seite 1, Zeilen 1-3; Seite 11, Zeilen 5-30; Figur * | 1,6 | |
| | ----- | | |

Der vorliegende Recherchenbericht wurde für alle Patentansprüche erstellt.

| Recherchenort DEN HAAG | Abschlußdatum der Recherche 17-06-1987 | Prüfer VAN IDDEKINGE R.E. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82